# EUROPÄISCHE PATENTSCHRIFT

(11) **EP 0 963 416 B1**
(45) Veröffentlichungstag und Bekanntmachung des Hinweises auf die Patenterteilung: **04.09.2002**
(21) Anmeldenummer: 98910642.2
(22) Anmeldetag: 11.02.1998
(51) Int. Cl.: C09D 5/03, C09D 5/36

(54) **VERFAHREN ZUR HERSTELLUNG VON GLANZPIGMENT-HALTIGEN PULVERLACKEN**
METHOD FOR PRODUCING POWDER LACQUER CONTAINING GLOSS PIGMENTS
PROCEDE DE PREPARATION DE LAQUE EN POUDRE CONTENANT DES PIGMENTS BRILLANTS

(30) Priorität: 21.02.1997 DE 19707051
(43) Veröffentlichungstag der Anmeldung: 15.12.1999
(73) Patentinhaber: MERCK PATENT GmbH, 64271 Darmstadt (DE)
(72) Erfinder: KIESER, Manfred, D-64291 Darmstadt (DE); STAHLECKER, Otto, D-64291 Darmstadt (DE)
(86) Internationale Anmeldenummer: EP9800741
(87) Internationale Veröffentlichungsnummer: WO98037154

(56) Entgegenhaltungen:
- EP-A- 0 716 132
- WO-A-94/09913
- WO-A-95/34606

## Beschreibung

Die vorliegende Erfindung betrifft ein Verfahren zur Herstellung von Glanzpigment-haltigen Pulverlacken.

Beschichtungen werden im allgemeinen durch Applikation vollständiger Beschichtungsmassen erzeugt, d. h., von Beschichtungssystemen, die bei der Applikation alle notwendigen Bestandteile, wie z. B. Bindemittel, Pigmente, Füllstoffe, Additive, Lösemittel, etc. einer Beschichtung enthalten.

Pulverlacke, also lösemittelfreie und umweltfreundliche Lacksysteme werden üblicherweise auch als komplette stofflich einheitliche Systeme angewendet. Das führt in manchen Fällen zu großen anwendungstechnischen Problemen, insbesondere bei Glanzpigment-haltigen Pulverlacken.

Der Pulverlack wird im allgemeinen hergestellt, indem man die verschiedenen Bestandteile des Pulverlacks wie Harz, Härtungsmittel, Pigmente, Verlaufsmittel, etc. trocken vermischt. Diese Mischung wird dann in einem geeigneten Schmelzmischer eingespeist, in dem die Bestandteile bei erhöhter Temperatur in der Schmelze vermischt werden. Das vom Extruder erzeugte schmelzflüssige homogene Materialgemisch wird beim Abkühlen in Schuppenform gebracht.

Der sich bei der konventionellen Pulverlackherstellung nun anschließende Mahlprozeß ist nur für Pulverlacke geeignet, die keine Glanzpigmente enthalten; denn bei dem Mahlprozeß der Schuppen zu Pulver werden die plättchenförmigen Glanzpigmente mechanisch zerstört, was zu Glanzeinbußen und zum Verlust der eigentlich gewünschten optischen Eigenschaften führt.

In der Regel werden Pulverbeschichtungen hergestellt, indem man den Pulverlack bestehend aus feinteiligen Teilchen, mit elektrostatischen Pulversprühvorrichtungen, z. B. durch Korona- oder Triboaufladung, auf den zu beschichtenden Gegenstand aufbringt. Natürlich läßt sich der Pulverlack auch mit Wirbelschicht-8eschichtem applizieren.

Es bestand daher ein großes Bedürfnis nach einem einfachen und kostengünstigen Verfahren zur Herstellung von Glanzpigment-haltigen Pulverlacken, das die Nachteile herkömmlicher Verfahren nicht oder nur in einem geringen Ausmaß zeigt

Überraschenderweise wurde nun ein sehr schonendes Verfahren zur Herstellung von Glanzpigment-haltigen Pulverlacken gefunden, wobei die Plättchenform der Glanzpigmente weitestgehend erhalten bleibt und die optischen Eigenschaften nahezu nicht beeinflußt werden. Der Begriff Glanzpigmente umfaßt dabei insbesondere Metalleffekt- und ganz besonders Perlglanzpigmente.

Gegenstand der Erfindung ist ein Verfahren zur Herstellung von Glanzpigment-haltigen Pulverlacken, dadurch gekennzeichnet, daß
(A) in den Füllraum eines ersten Behälters (1) zunächst die Ausgangsmaterialien bestehend aus den üblichen Pulverlackkomponenten und ein oder mehreren plättchenförmigen Glanzpigmenten eingebracht werden, wobei der Behälter ein Mischelement (3) aufweist und gegebenenfalls mit einer Thermostatisierungsvorrichtung (4) versehen ist und man anschließend in den Füllraum ein überkritisches Fluid einläßt und zuletzt die Ausgangsmaterialien in Gegenwart des überkritischen Fluids mischt,
   und
(B) die Mischung aus den üblichen Pulverlackkomponenten, ein oder mehreren plättchenförmigen Glanzpigmenten und dem überkritischem Fluid durch einen Verteiler (6) in einen zweiten Behälter (2) überführt wird, wobei der Verteiler mehrere Düsen mit einem Öffnungsdurchmesser von 0,0025 cm bis 2,5 cm aufweist, und man den zweiten Behälter bei der Überführung bei einem Innendruck von 0 bar bis 350 bar und einer Temperatur von -85 bis 220 °C hält.

Gegenstand der Erfindung sind weiterhin nach diesem Verfahren erhältliche Pulverlacke, die sich durch ihren hohen Anteil, d. h. insbesondere 10-50 Gew.%, an Glanzpigmenten auszeichnen sowie die Verwendung der Pulverlacke zur Einfärbung und Abtönung anderer Pulverlacke z. B. durch das dry-blend-Verfahren, welches u.a. aus der EP 0 176 132 bekannt ist.

Das erfindungsgemäße Verfahren erlaubt die einfache und kostengünstige Herstellung Glanzpigment-haltiger Pulverlacke, die sich durch einen hohen Glanz auszeichnen. Weiterhin werden mit dem erfindungsgemäßen Verfahren Pulverlacke mit hoher Rieselfähigkeit erhalten, wobei vielfach kein Zusatz von Rieselhilfen erforderlich ist; sollte dennoch einmal der Zusatz einer Rieselhilfe erwünscht sein, ist die zur Erzielung einer bestimmten Rieselfähigkeit erforderliche Menge an Rieselhilfe wesentlich kleiner als für nicht erfindungsgemäß hergestellte Pulverlacke.

Bei der Herstellung der Glanzpigment-haltigen Pulverlacke werden bei Raumtemperatur ein oder mehrere Glanzpigmente und die üblichen Pulverlackkomponenten und gegebenenfalls übliche Additive, eine Quelle eines überkritischen Fluids, ein erster Behälter mit Mischelement und ein zweiter Behälter bereitgestellt. Man trägt die Glanzpigmente und die üblichen Pulverlackkomponenten sowie das überkritische Fluid in den ersten Behälter ein und stellt eine homogene Pulverlacklösung/dispersion her. In dem Fall, daß der Glanzpigment-haltige Pulverlack neben den Glanzpigmenten noch konventionelle Pigmente und Füllstoffe enthält, empfiehlt es sich, zunächst die üblichen Pulverlackkomponenten mit den konventionellen Pigmenten und/oder Füllstoffen unter höheren Scherbedingungen vorab zu dispergieren. Anschließend erfolgt dann die Zugabe der Glanzpigmente, die dann unter niedrigeren Scherbedingungen mit den Pulverlackkomponenten gemischt werden. Danach wird der Inhalt des ersten Behälters in den zweiten Behälter überführt, der unter einem geringeren Druck steht als der erste Behälter.

Nach dem erfindungsgemäßen Verfahren wird die Glanzpigmentkomponente sicher in die Pulverlackteilchen eingelagert. Besonders überraschend ist, daß die nach dem erfindungsgemäßen Verfahren hergestellten Glanzpigment-haltigen Pulverlacke einen hohen Glanz aufweisen und keine der bei Glanzpigment-haltigen Pulverlacken sonst üblichen Probleme auftreten. Hervorzuheben ist die im Vergleich zu den vorbekannten Mischungsanordnungen einfache Handhabung der erfindungsgemäß verwendeten Mischungsvorrichtung, die auch für kleine Mischungsansätze gefahren werden kann und schnell und einfach zu reinigen ist.

Der Anteil der Glanzpigmentkomponente im fertigen Pulverlack kann zwischen 0,1 und 50 Gew.%, insbesondere zwischen 1 und 20 Gew.%, bezogen auf die Masse der Mischung, betragen.

Die Glanzpigmentkomponente kann handelsübliche pulverförmige Metallpigmente, z. B. Standard von der Fa. Eckart®, Glanzpigmente, wie z. B. Paliocrom®-Pigmente der Fa. BASF, sowie insbesondere Perlglanzpigmente enthalten, wie sie z. B. in den deutschen Patenten und Patentanmeldungen 14 67 468, 19 59 998, 20 09 566, 22 14 545, 22 15 191, 22 44 298, 23 12 331, 25 22 572, 31 37 808, 31 37 809, 31 51 343, 31 51 354, 31 51 355, 32 11 602, 32 35 017 und 38 42 330 beschrieben sind und von der Fa. Merck KGaA, Darmstadt unter dem Handelsnamen Iriodin® vertrieben werden. Bevorzugte Perlglanzpigmente sind insbesondere TiO₂/Glimmerpigmente und/oder Fe₂O₃/Glimmerpigmente. Weiterhin können z. B. als Glanzpigment auch Graphit, beschichtete Graphit-, TiO₂-, SiO₂-, Al₂O₃-Plättchen, BiOCI, chiral nematisch vernetzte Flüssigkristallplättchen, letztere wie sie z. B. von der Fa. Wacker, BRD, vertrieben werden, dielektrische Schichtpigmente, z. B. von der Fa. Flex, USA, oder holographische Plättchenpigmente, z. B. bekannt aus der US 5,415,9, verwendet werden. Als Glanzpigment kann ferner auch ein Gemisch der genannten Pigmente eingesetzt werden.

Als Pulverlackkomponenten kommen alle in herkömmlichen Pulverlacken eingesetzte Rohstoffe in Betracht. Harzkomponenten sind insbesondere reaktive Epoxide, Polyester, Polyurethane oder Acrylate; daneben sind jedoch auch andere Polymere prinzipiell geeignet, die sowohl reaktiv als auch thermoplastisch sein können. Besonders bevorzugt sind Polyester-, Epoxid- sowie Polyester-Epoxid-Systeme.

Zusätzlich können die erfindungsgemäßen Pulverlacke auch noch weitere Komponenten enthalten, wie z. B. Härter, Verlaufsmittel, Rieselhilfen, Stabilisatoren, Pigmente und/oder Füllstoffe. Als weitere mögliche Zusätze sind z. B. Triboadditive zu nennen.

Als überkritisches Fluid werden sowohl Flüssigkeiten als auch Gase verwendet. Der Begriff "überkritisches Fluid" bezeichnet einen Stoff, der bei bestimmten Temperaturen und Drücken nicht länger die Eigenschaften entweder eines Gases oder einer Flüssigkeit besitzt. Beispiele für überkritische Fluide, die sich zur Verwendung bei der vorliegenden Erfindung eignen, sind u.a. CO₂, Wasser, Distickstoffmonoxid, Methan, Ethan, Ethylen, Propan, Pentan, Benzol, Methanol, Ethanol, Isopropanol, verschiedene Fluorkohlenwasserstoffe wie Chlortrifluormethan und Monofluormethan, Toluol, Pyridin, Cyclohexan, Dekalin, Cyclohexanol, o-Xylol und Tetralin. Diese Verbindungen können entweder für sich alleine oder als Gemisch eingesetzt werden. Die genannten Verbindungen können auch zusammen mit einem Lösungsmittel eingesetzt werden. Geeignete Lösungsmittel sind z. B. Aceton, Ketone oder Ether. Vorzugsweise wird als überkritisches Fluid CO₂, da es nicht brennbar und zudem sehr preiswert ist, in Abwesenheit eines Lösungsmittels eingesetzt.

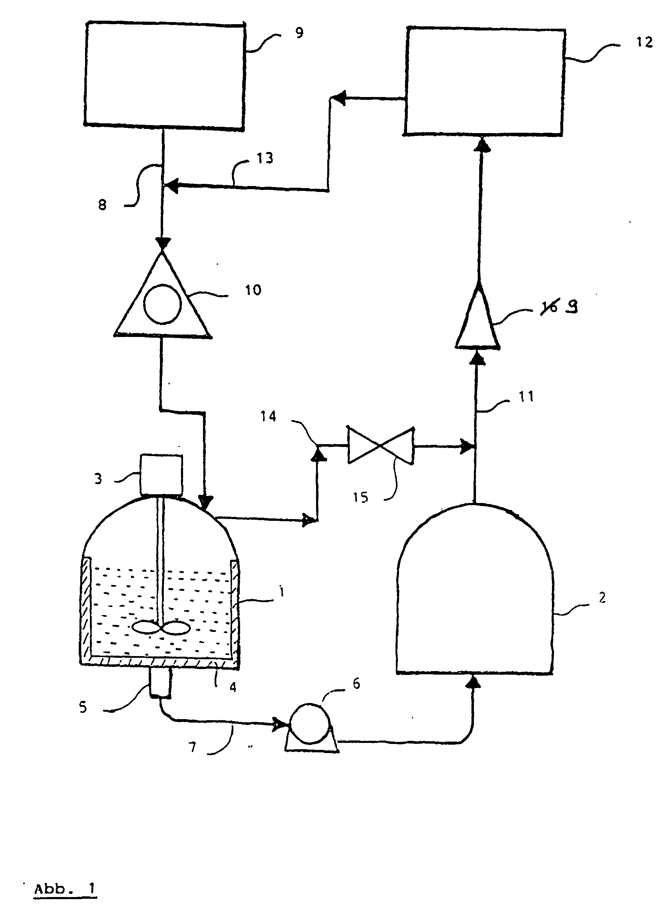

Abbildung 1 zeigt schematisch eine Vorrichtung für die Herstellung der Glanzpigment-haltigen Pulverlacke. Eine ähnliche Vorrichtung für die Herstellung konventioneller Pulverlacke, also Pulverlacke, die keine Glanzpigmente enthalten, ist z. B. aus der U.S. 5,399,597 bekannt. In der Abbildung bedeutet (1) ein erster Druckbehälter, der über eine Leitung (7) mit einem Aufnahmebehälter (2) verbunden ist. An den Druckbehälter (1) ist über die Leitung (8) eine Gasquelle (9) angeschlossen. Das Gas wird vorzugsweise unter Druck mit einem Verdichter oder einer Flüssigkeitspumpe (10) in den Behälter (1) eingespeist. Der Aufnahmebehälter (2) ist über eine Leitung (11) mit dem Rückführtank (12) verbunden, der wiederum über Leitung (13) mit dem Gastank verbunden ist.

Der Druckbehälter (1) enthält vorzugsweise am Boden ein Auslaßventil (5) zur Entleerung des Füllraums. Im Kopfbereich des Druckbehälters (1) ist der mit Leitung (11) verbundene Einlaß von Leitung (14) verbunden, in welcher ein Steuerventil (15) eingebaut ist. Leitung (11) enthält einen Verdichter (16), der zur Verdichtung und Überführung von aus dem Druckbehälter (1) oder dem Aufnahmebehälter (2) austretendem Gas in den Rückführtank (12) dient.
Der Druckbehälter (1) enthält eine verschließbare Zugangsöffnung, durch die er mit Materialien beschickt werden kann, und ein mechanisches Rührwerk (3) zum mechanischen Bewegen und Rühren des Inhalts des Druckbehälters (1). Der Aufnahmebehälter (2) enthält ebenfalls eine verschließbare Zugangsöffnung, durch die man Proben von darin enthaltenen Materialien entnehmen oder diese Materialien austragen kann. Die Behälter (1) und (2) verfügen jeweils bevorzugt über ein Schnellverschlußsystem, das sich ohne Werkzeuge öffnen und schließen läßt. Außerdem enthält Behälter (1) eine Ventilkonstruktion mit einer Zuführöffnung, die nach Druckbeaufschlagung den schnellen Zusatz geringer Mengen von Materialien (z.B. Additive oder Pigmente) zum Behälter (1) ermöglicht. Behälter (2) enthält ferner eine Fördereinrichtung zur Erleichterung eines schnellen Austrags der Materialien aus dem Behälter (2).

Der Druckbehälter (1) und der Aufnahmebehälter (2) bestehen bevorzugt aus Metall, insbesondere aus Edelstahl, aus abrieb- und wärmebeständigen Kunststoffen oder aus Keramik, z. B aus Porzellan. Es versteht sich jedoch von selbst, daß auch andere Materialien in Betracht kommen, wie beispielsweise nickelbeschichteter Kohlenstoffstahl oder Behälter aus Kohlenstoffstahl mit anderen geeigneten chemischen inerten Einsätzen oder Auskleidungen.

Bei dem erfindungsgemäßen Verfahren wird zunächst der Druckbehälter (1) mit den Ausgangsmaterialien beschickt. Dann wird der Druckbehälter (1) verschlossen und isoliert. Anschließend speist man in den Behälter (1) über Leitung (8) Gas aus der Quelle (9) ein, bis der gewünschte Druck erreicht ist. Eine kritische Temperatur erhält man entweder durch Erhitzen des Behälters (1) und/oder Erhitzen des Flüssigkeits-Gas-Stroms beim Eintritt in den Behälter (1) und gegebenenfalls gleichzeitiges Bewegen des Behälters (1). Bei dem Druck und der Temperatur in Behälter (1) wird das Gas in ein überkritisches Fluid umgewandelt. Dabei kommen Drücke von 20 bar bis 1500 bar in Frage. Bei Verwendung eines Gases wie CO₂ kommt ein Druck von 35 bar bis 500 bar, vorzugsweise von 35 bar bis 350 bar und insbesondere von 70 bar bis 300 bar zur Anwendung. Der jeweilige Druck hängt selbstverständlich von Variablen wie der Temperatur des Behälters (1) und dem jeweils verwendeten superkritischen Fluid ab.

Nach der Druckbeaufschlagung des Behälters (1) wird das Rührwerk (3) eingeschaltet, und die Ausgangsmaterialien werden mit dem überkritischen Fluid vermischt. Dabei herrscht in Behälter (1) eine Innentemperatur von -85 °C bis 200 °C. Bei Verwendung von CO₂ als überkritisches Fluid beträgt die Temperatur 15 °C bis 160 °C, vorzugsweise 20 °C bis 150 °C, und insbesondere 30 °C bis 100 °C. Die jeweilige Temperatur hängt selbstverständlich von verschiedenen Variablen, wie beispielsweise dem verwendeten superkritischen Fluid, der Zusammensetzung der Ausgangsmaterialien, den jeweiligen Drücken und dem Aufbau des Druckbehälters ab. Vorzugsweise hält man den Behälter (1) bei einer Temperatur, die unter dem Schmelzpunkt der zu verarbeitenden Ausgangsmaterialien liegt. Die Temperatur im Behälter (1) liegt bevorzugt im Bereich von 5 °C unterhalb der Glasübergangstemperatur T_{G} mindestens eines der zu verarbeitenden Materialien bis etwa zum Schmelzpunkt eines derartigen Materials. Im Fall eines amorphen Materials bedeutet "Schmelzpunkt" die Temperatur, bei der das Material vollkommen flüssig wird.

Vorzugsweise ist der Behälter (1) mit Wärmetauschern oder anderen geeigneten Heiz- und Kühleinrichtungen (4) ausgerüstet um die gewünschte Temperatur zu erreichen. Dabei sollte die Temperatur auch im ungünstigen Fall (hohe Umdrehungsgeschwindigkeit des Mischelementes (3), große Mischungsmenge) auf mindestens etwa ± 2 °C konstant gehalten werden.

Die Ausgangsmaterialien werden in Behälter (1) 1 - 480 Minuten, vorzugsweise 5 - 300 Minuten und insbesondere 30 - 240 Minuten lang vermischt. Die Mischzeit kann bei hohen Umfangsgeschwindigkeiten kürzer gewählt werden, wobei jedoch niedrigere Umfangsgeschwindigkeiten von nicht mehr als 10-25 m/s bevorzugt sind um die bruchempfindlichen Glanzpigmente zu dispergieren.

In der verwendeten Mischungsvorrichtung kann das Mischelement (3) z. B. als Flügelrührer oder Dissolverscheibe ausgebildet sein, aber auch andere weitere Formen aufweisen. Das Mischelement wird vorzugsweise bei Drehzahlen zwischen 0 und 20000 U/min betrieben. Die Umfangsgeschwindigkeit des Mischelements (3) kann in einem weiten Bereich zwischen 1-50 m/s, vorzugsweise 5-40 m/s und insbesondere 10-25 m/s variiert werden.

Nach der Durchmischung der eingesetzten Komponenten wird das Ventil (5) geöffnet und so lange offen gelassen, bis die ursprünglich im Druckbehälter (1) enthaltenen Ausgangsmaterialien im wesentlichen vollständig in den Aufnahmebehälter (2), der bei einem niedrigeren Druck gehalten wird als Behälter (1), überführt worden sind. Danach wird Ventil (15) geöffnet, wodurch der Behälter (1) entspannt wird und Gas in den Rückführtank (12) strömen kann. Das Gas wird dann über Leitung (13) in Leitung (8) geleitet und zur Wiederverwendung verfügbar gemacht.

Bei der Überführung der festen Materialien in den Aufnahmebehälter (2) wird der Behälter (2) bevorzugt bei einem konstanten und niedrigeren Druck als Druckbehälter (1) gehalten. Demgemäß treten das Gas und die Ausgangsmaterialien bevorzugt mit sehr hoher Geschwindigkeit in den Aufnahmebehälter (2) ein. Im Behälter (2) herrscht eine Temperatur von -85 °C bis 220 °C, vorzugsweise von -18 °C bis 160 °C und insbesondere von 0 °C bis 130 °C. Wie bei Behälter (1) können zur Aufrechterhaltung der gewünschten Temperatur in Behälter (2) Wärmetauscher oder andere Heiz- und Kühleinrichtungen erforderlich sein. Vorzugsweise hält man den Behälter (2) bei einer Temperatur, die unter dem Schmelzpunkt der zu verarbeitenden Materialien liegt. Man hält den Behälter (2) bei einem Druck von 0 bar bis 350 bar, vorzugsweise von 5 bar bis 150 bar und insbesondere von 10 bar bis 150 bar. Der jeweilige Druck und die jeweilige Temperatur in Behälter (2) hängen selbstverständlich wiederum von verschiedenen Variablen ab, beispielsweise dem jeweils verwendeten Gas, der Zusammensetzung der Ausgangsmaterialien und dem Aufbau der Einrichtungen.

In Leitung (7) ist unmittelbar vor dem Aufnahmebehälter (2) vorzugsweise ein Verteiler (6) mit mehreren Düsen, durch die das Gas und/oder das überkritische Fluid und die Ausgangsmaterialien gesprüht werden, angebracht. Zum Versprühen des Glanzpigment-haltigen Pulverlacks kommt eine beliebige Anzahl von Düsen in Betracht. Selbstverständlich hängt die Wahl der richtigen Düse von verschiedenen Parametern ab, wie beispielsweise den in Behälter (1) herrschenden Drücken, der gewünschten Teilchengröße, den Durchsätzen, den zu verarbeitenden Materialien und dem verwendeten überkritischen Fluid.

Die Sprühdüsen weisen Öffnungsweiten von 0,0025 cm bis 2,5 cm, vorzugsweise von 0,0125 cm bis 1,25 cm und insbesondere von 0,025 cm bis etwa 0,25 cm auf. Das Rührwerk (3) enthält einen Elektromotor, der einen Mischer antreibt. Der Mischer kann beliebig viele herkömmliche Mischeinrichtungen enthalten. Selbstverständlich hängt die Wahl des richtigen Mischers von verschiedenen Parametern ab, wie beispielsweise der Größe des Motors, den zu mischenden Komponenten, dem Aufbau des Behälters (1), dem verwendeten Fluid und den in Behälter (1) herrschenden Drücken.

Bei Verwendung von CO₂ als überkritisches Fluid wird dieses vorzugsweise so in den Behälter (1) eingespeist oder darin eingesetzt, daß etwa 10 - 90 Gew.% CO₂ und 90 - 10 Gew.% Ausgangsmaterialien, vorzugsweise 15 - 85 Gew.% CO₂ und 85 - 15 Gew.% Ausgangsmaterial und insbesondere 20 - 80 Gew.% CO₂ und 80- 20 Gew.% Ausgangsmaterialien vorliegen.

Nach dem Überführen und Versprühen der Pulverlacklösung in Behälter (2) sind die Glanzpigmentpartikel in den Pulverlackteilchen fixiert und somit homogen im Pulverlackkorn verteilt.

Nach dem erfindungsgemäßen Verfahren lassen sich auch glanzpigmentierte Pulverlackkonzentrate herstellen, also Pulverlacke mit einer sehr hohen Konzentration an Glanzpigmenten. Der Gewichtsanteil an Glanzpigmenten kann dabei bis zu 50 Gew.%, vorzugsweise bis zu 25 Gew.% betragen. Diese mit Glanzpigmenten höher pigmentierten Pulverlacke können in geringem Anteil zur Einfärbung bzw. Abtönung anderer Pulverlacke dienen. Bei dem Applikationsprozeß sind allerdings Entmischungserscheinungen nicht auszuschließen. Diese Entmischung führt zu Veränderungen der Verarbeitungseigenschaften und der optischen Eigenschaften der Beschichtung. Die Entmischungs-probleme lassen sich durch die Zugabe von leitfähigen Pigmenten lösen. Ein derartiges Verfahren ist z. B. aus der EP 0 716 132 bekannt. Im Bereich glanzpigmentierter Pulverlacke ist somit eine flexiblere, weiter-gehende Abtönmöglichkeit gegeben. Weiterhin lassen sich auch zusätzliche Effekte wie Sprenkeleffekte, Hammerschlageffekte realisieren. Die Pulverlackkonzentrate können auch als pulverförmige Masterbatches bezeichnet werden und bei geeigneter Wahl des Bindemittels zur Einfärbung von Kunststoffen, insbesondere thermoplastischen Kunststoffen, verwendet werden.

Dem erfindungsgemäßen Verfahren kommt somit eine wesentliche wirtschaftliche Bedeutung zu.

Das nachfolgende Beispiel soll die Erfindung erläutern ohne sie jedoch zu begrenzen.

### Beispiel

Ein Druckbehälter (1) aus rostfreiem Stahl mit einem Fassungsvermögen von 100 I wird mit einer Mischung der folgenden Ausgangsmaterialien beschickt:

| | |
|---|---|
| Polyesterharz (Uralac 2400, DSM) | 88,0 Gew. % |
| Vernetzer (Araldit PT 800, Ciba) | 6.5 Gew. % |
| Verlaufsmittel (Acronal 4F, BASF) | 0,5 Gew. % |
| Benzoin | 0,5 Gew. % |
| Iriodin® 9103 WR (TiO₂/Glimmerpigment mit einer Teilchengröße von 10-40 µm der Fa. Merck KGaA) | 4,5 Gew. %. |

Anschließend füllt man den Druckbehälter (1) mit CO₂ bis zu einem Druck von 200 bar (80 °C), wodurch das CO₂ zu einem überkritischen Fluid wird. Man setzt im Behälter (1) soviel Ausgangsmaterial ein, daß darin 70 Gew.% CO₂ und 30 Gew.% Ausgangsmaterial vorliegen. Nach der Isolierung des Behälters (1) mischt man die einzelnen Komponenten und das überkritische Fluid etwa 60 Minuten lang mit Rührwerk (3). Der Behälter (1) wird mit einem herkömmlichen Heiz- und Kühlregelsystem (4) auf eine Temperatur von etwa 80 °C eingestellt.
Nach dem Mischen der Ausgangsmaterialien zu einem homogenen Produkt öffnet man das Ventil (5) und sprüht das homogene Produkt durch den Verteiler (6) in den Aufnahmebehälter (2). Dabei handelt es sich um einen Behälter aus rostfreiem Stahl mit einem Fassungsvermögen von 500 l. Man hält den Aufnahmebehälter (2) bei einem Staudruck von etwa 20 bar. Die Leitung (7) hat einen Innendurchmesser von etwa 2,5 cm. Der Verteiler enthält sechs separate, parallel angeordnete Düsen. Dabei handelt es sich um hydraulische Zerstäubungsdüsen mit Öffnungsweiten von 0,05 cm.
Nach der vollständigen Überführung des homogen pigmentierten Pulverlacks in den Aufnahmebehälter (2) wird dieser vollständig entspannt, wobei das CO₂ für die Wiederverwendung in den Lagertank (12) überführt wird. Auch der Druckbehälter (1) steht dann zur Wiederverwendung bereit. Anschließend entspannt man den Aufnahmebehälter (2) über Leitung (11) und Verdichter (9) und überführt das in Behälter (2) enthaltene CO₂ zur Wiederverwendung in den Lagertank (12). Danach öffnet man den Aufnahmebehälter (2) und trägt das homogene Produkt in Pulverform aus.

## Patentansprüche

1. Verfahren zur Herstellung von Glanzpigment-haltigen Pulverlacken, **dadurch gekennzeichnet, dass**
(A) in den Füllraum eines ersten Behälters (1) zunächst die Ausgangsmaterialien bestehend aus den üblichen Pulverlackkomponenten und ein oder mehreren plättchenförmigen Glanzpigmenten eingebracht werden, wobei der Behälter ein Mischelement (3) aufweist und gegebenenfalls mit einer Thermostatisierungsvorrichtung (4) versehen ist und man anschließend in den Füllraum ein überkritisches Fluid einläßt und zuletzt die Ausgangsmaterialien in Gegenwart des überkritischen Fluids mischt,
und
(B) die Mischung aus den üblichen Pulverlackkomponenten, ein oder mehreren plättchenförmigen Glanzpigmenten und dem überkritischem Fluid durch einen Verteiler (6) in einen zweiten Behälter (2) überführt wird, wobei der Verteiler mehrere Düsen mit einem Öffnungsdurchmesser von 0,0025 cm bis 2,5 cm aufweist, und man den zweiten Behälter bei der Überführung bei einem Innendruck von 0 bar bis 350 bar und einer Temperatur von -85 bis 220 °C hält.

2. Verfahren nach Anspruch 1, **dadurch gekennzeichnet, daß** das Mischelement (3) als Flügelrührer oder Dissolverscheibe ausgebildet ist.

3. Verfahren nach Anspruch 1 oder 2, **dadurch gekennzeichnet, daß** die Umfangsgeschwindigkeit des Mischelements (3) während des Mischens 1-50 m/s beträgt.

4. Verfahren nach einem der Ansprüche 1 bis 3, **dadurch gekennzeichnet, daß** das Glanzpigment ein Perlglanzpigment und/oder ein Metalleffektpigment ist.

5. Verfahren nach Anspruch 4, **dadurch gekennzeichnet, daß** das Perlglanzpigment ein TiO₂/Glimmerpigment und/oder ein Fe₂O₃/-Glimmerpigment ist.

6. Verfahren nach einem der Ansprüche 1 bis 5, **dadurch gekennzeichnet, daß** der Anteil des Glanzpigments im Pulverlack 0,1 bis 50 Gew.% beträgt.

7. Verfahren nach einem der Ansprüche 1 bis 6, **dadurch gekennzeichnet, daß** das überkritische Fluid CO₂ ist.

8. Glanzpigment-haltiger Pulverlack hergestellt nach dem Verfahren gemäß einem der Ansprüche 1 bis 7.

9. Verwendung der Glanzpigment-haltigen Pulverlacke hergestellt nach dem Verfahren nach einem der Ansprüche 1 bis 7 zur Einfärbung und Abtönung von anderen Pulverlacken und Kunststoffen.

## Claims

1. Process for the preparation of lustre pigment-containing powder coatings, **characterised in that**
(A) firstly the starting materials consisting of the conventional powder-coating components and one or more platelet-shaped lustre pigments are introduced into the fill space of a first container (1), the container having a mixing element (3) and optionally being provided with a thermostatting device (4), and a supercritical fluid is subsequently admitted into the fill space, and finally the starting materials are mixed in the presence of the supercritical fluid,
and
(B) the mixture of the conventional powder-coating components, one or more platelet-shaped lustre pigments and the supercritical fluid is transferred into a second container (2) through a distributor (6), the distributor having a plurality of nozzles having an aperture diameter of from 0.0025 cm to 2.5 cm, and the second container is maintained at an internal pressure of from 0 bar to 350 bar and a temperature of from -85 to 220°C during the transfer.

2. Process according to Claim 1, **characterised in that** the mixing element (3) is designed as a paddle stirrer or dissolver disc.

3. Process according to Claim 1 or 2, **characterised in that** the peripheral velocity of the mixing element (3) during the mixing is 1-50 m/s.

4. Process according to one of Claims 1 to 3, **characterised in that** the lustre pigment is a pearlescent pigment and/or a metal-effect pigment.

5. Process according to Claim 4, **characterised in that** the pearlescent pigment is a TiO₂/mica pigment and/or an Fe₂O₃/mica pigment.

6. Process according to one of Claims 1 to 5, **characterised in that** the proportion of the lustre pigment in the powder coating is from 0.1 to 50% by weight.

7. Process according to one of Claims 1 to 6, **characterised in that** the supercritical fluid is CO₂.

8. Lustre pigment-containing powder coating prepared by the process according to one of Claims 1 to 7.

9. Use of the lustre pigment-containing powder coatings prepared by the process according to one of Claims 1 to 7 for colouring and tinting other powder coatings and plastics.

## Revendications

1. Procédé pour la fabrication de laques en poudre contenant des pigments brillants, **caractérisé en ce que**
a) les matières de départ constituées par les composants habituels de la laque en poudre et un ou plusieurs pigments brillants sous forme de plaquettes sont introduits dans le volume de remplissage du premier conteneur (1), qui est équipé d'un dispositif de mélange (3) ainsi que, le cas échéant, avec un dispositif de contrôle de température (4) et que l'on ajoute par la suite, dans ce volume de remplissage, un fluide supercritique pour mélanger finalement les matériaux de base en présence du fluide supercritique,
et
b) le mélange obtenu à partir des composants habituels de laque en poudre, d'un ou plusieurs pigments brillants sous forme de plaquettes et du fluide supercritique, soit transféré au moyen d'un distributeur (6) dans un deuxième conteneur (2), où le distributeur est muni de plusieurs buses d'une diamètre allant de 0,0025 cm à 2,5 cm et où le deuxième conteneur est maintenu pendant le transfert à une pression interne allant de 0 à 350 bars et à une température allant de -85 à 220°C.

2. Procédé selon la revendication 1, **caractérisé en ce que** le dispositif mélangeur (3) est un mélangeur à pâles ou un disque disperseur.

3. Procédé selon la revendication 1 ou 2, **caractérisé en ce que** la vitesse de rotation du dispositif de mixage (3) pendant le mélangeage est de 1-50 m/sec.

4. Procédé selon l'une des revendications 1 à 3, **caractérisé en ce que** le pigment brillant est un pigment à effet de nacre et/ou un pigment à effet métallique.

5. Procédé selon revendication 4, **caractérisé en ce que** le pigment à effet de nacre est un pigment TiO₂/mica et/ou un pigment Fe₂O₃/mica.

6. Procédé selon l'une des revendications 1 à 5, **caractérisé en ce que** la teneur en pigments brillants dans la laque en poudre est de 0,1 à 50 % du poids.

7. Procédé selon l'une des revendications 1 à 6, **caractérisé en ce que** le fluide supercritique est du CO₂.

8. Laque en poudre contenant des pigments brillants, fabriquée selon le procédé décrit dans l'une des revendications 1 à 7.

9. Utilisation de laques en poudre fabriquées selon le procédé décrit dans l'une des revendications 1 à 7 pour la coloration et le nuançage d'autres laques en poudres et matières plastiques
